# EUROPÄISCHE PATENTSCHRIFT

(11) **EP 2 208 452 B1**
(45) Veröffentlichungstag und Bekanntmachung des Hinweises auf die Patenterteilung: **17.04.2013**
(21) Anmeldenummer: 10150778.8
(22) Anmeldetag: 14.01.2010
(51) Int. Cl.: A47J 31/60, A47J 31/44, A47J 31/46

(54) **Vorrichtung zum Aufschäumen einer Mischung aus Luft, Dampf und Milch, insbesondere ein Milchaufschäumer für einen Kaffeeautomaten**
Device for foaming a mixture of air, steam and milk, in particular a milk foamer for a coffee machine
Dispositif de moussage d'un mélange composé d'air, de vapeur et de lait, notamment un mousseur à lait pour un automate à café

(30) Priorität: 20.01.2009 DE 102009000309
(43) Veröffentlichungstag der Anmeldung: 21.07.2010
(73) Patentinhaber: BSH Bosch und Siemens Hausgeräte GmbH, 81739 München (DE)
(72) Erfinder: Schneiderbauer, Gottfried, 84553 Halsbach (DE)

(56) Entgegenhaltungen:
- EP-A1- 1 656 863
- EP-A1- 2 025 268

## Beschreibung

Die Erfindung betrifft eine Vorrichtung zum Aufschäumen einer Mischung aus Luft, Dampf und Milch, insbesondere einen Milchaufschäumer für Kaffeeautomaten, wie aus dem Dokument EP 2 025 268 bekannt.

Eine Vorrichtung zum Aufschäumen von Milch kann prinzipiell nach dem Jet- bzw. dem Wasserstrahlpumpenprinzip funktionieren. Dabei erzeugt ein in den Milchaufschäumer eintretender Dampf, der über eine Düse eingepresst wird, einen Unterdruck in dem Milchaufschäumer, wodurch über einen in den Milchaufschäumer integrierten Milchzulauf Luft und Milch angesaugt wird. Der integrierte Milchzulauf kann wiederum mit einem Schlauch versehen werden, der in einem Milchreservoir mündet. Um einen solchen Milchaufschäumer zu reinigen, kann man den Ansaugschlauch vom Milchreservoir in ein Wasserreservoir umhängen und die Dampfausgabe starten. In diesem Fall wird anstatt Milch Wasser angesaugt, was zu einer gewissen Reinigung des Schlauches führt. Der Milchaufschäumer wird dabei von einem Dampf-/Luftgemisch durchströmt. Nach Ablauf einer gewissen Reinigungszeit sind der Schlauch und der Milchaufschäumer von den meisten Milchresten befreit.

Ein Nachteil dieser Ausführungsform ist, dass der Reinigungseffekt jedoch aufgrund des meist kalten Wassers des Wasserreservoirs nicht besonders hoch ist und dass aufgrund des geringen Reinigungseffektes und der vergleichsweise langen Reinigungsdauer ein hohes Abwasseraufkommen auftritt.

Die vorliegende Erfindung beschäftigt sich mit dem Problem, für eine solche Vorrichtung zum Aufschäumen einer Mischung aus Luft, Dampf und Milch eine verbesserte oder zumindest eine andere Ausführungsform anzugeben, die eine verbesserte Reinigungsmöglichkeit mit einem deutlich höheren Reinigungseffekt aufweist.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, ein freies Ende des Ansaugschlauchs so auszuformen, dass es mit einem Schaumauslauf des Milchaufschäumers koppelbar ist. Im Folgenden wird die Bezeichnung "Fluid" für eine Flüssigkeit, ein Gas oder eine Mischung aus Flüssigkeiten und/oder Gasen verwendet. In gekoppeltem Zustand kann somit ein Fluid, das Luft, Dampf, Wasser und/oder Restmilch enthalten kann, in dem Milchaufschäumer und dem Ansaugschlauch zirkulieren. Damit am integrierten Zulauf ein Reinigungsfluid angesaugt werden kann, muss dem Milchaufschäumer Dampf zugeführt werden. Aufgrund der kontinuierlichen Zuführung von Dampf wird ein zweiter Auslauf benötigt, über den ein Teil des im Milchaufschäumer und in dem Ansaugschlauch zirkulierenden Fluids abgeführt werden kann. Durch diese stetige Zufuhr von Dampf und den stetigen Ablauf von Fluid, erfolgt eine permanente Verdünnung des noch Milch enthaltenden Fluids bei einem relativ geringen Abwasseraufkommen und der Schlauch und der Milchaufschäumer werden gründlich gereinigt. Vorteilhaft hieran sind der geringe Wasserverbrauch und die höhere Reinigungswirkung aufgrund der höheren Temperatur des in dem Milchaufschäumer und in dem Ansaugschlauch zirkulierenden Fluids.

Um den Reinigungseffekt noch besser zu gestalten, kann eine Steuerungseinrichtung des Milchaufschäumers so ausgebildet sein, dass beim Starten des Reinigungsbetriebs, nachdem das freie Ende des Ansaugschlauchs mit einem Schaumauslauf gekoppelt wurde, ein Detergens zugegeben wird. Dadurch lösen sich eventuell vorhandene Milchrestbestandteile besser und der Milchaufschäumer und der Ansaugschlauch werden noch gründlicher gereinigt. Nach einem solchen Reinigungsschritt mit einem Detergens sollte das System klar gespült werden, damit keine Reste des Detergens nachfolgende Schaumzubereitungen verunreinigen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Aufschäumrichtung für eine Mischung aus Luft, Dampf und Milch im Normalbetrieb,
- Fig. 2: die Aufschäumrichtung für eine Mischung aus Luft, Dampf und Milch im Reinigungsbetrieb.

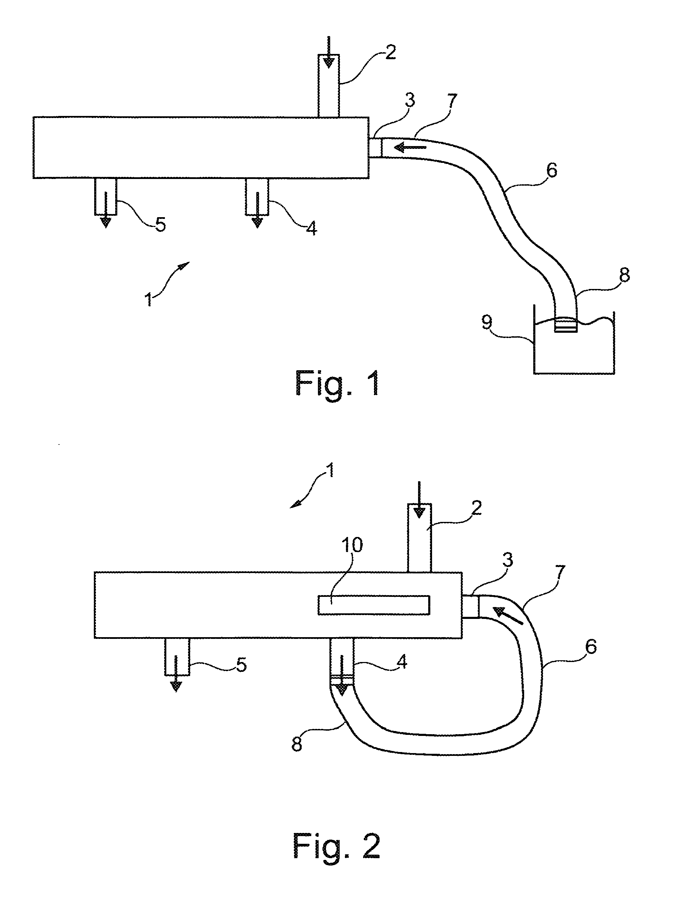

Entsprechend der Fig. 1, umfasst eine Aufschäumvorrichtung 1 für eine Mischung aus Luft, Dampf und Milch einen Dampf-/Luftzuführkanal 2, einen Ansaugkanal 3 für Milch, einen ersten Auslauf 4 und einen zweiten Auslauf 5, wovon zumindest der erste Auslauf 4 zur Ausgabe von Milchschaum ausgebildet ist, und ein Leitungselement 6, das im Normalbetrieb der Aufschäumvorrichtung 1 mittels eines ersten Leitungsendes 7 mit dem Ansaugkanal 3 verbunden ist und mittels eines zweiten, freien Leitungsendes 8 mit einem Milchreservoir 9 in Verbindung steht. In diesem Normalbetrieb erzeugt ein durch den Dampf-/Luftzuführkanal 2 eintretender Dampf einen Unterdruck in der Aufschäumvorrichtung 1, wodurch Milch aus dem Milchreservoir 9 über das Leitungselement 6 am Ansaugkanal 3 aufgrund des Jet- bzw. Wasserstrahlpumpenprinzips angesaugt wird. Ein in der Aufschäumvorrichtung 1 gebildeter Milchschaum tritt dann zumindest aus dem ersten Auslauf 4 aus.

In einer bevorzugten Ausführungsform ist auch der zweite Auslauf 5 zur Ausgabe von Milchschaum ausgebildet. Dabei können der erste Auslauf 4 und der zweite Auslauf 5 soweit auseinander liegen, dass für zwei getrennte Tassen Milchschaum gezapft werden kann oder der aus beiden Ausläufen 4, 5 austretende Milchschaum wird in eine Tasse geleitet. Ebenfalls denkbar ist es, dass der zweite Auslauf 5 von einem ersten Auslauf 4 abzweigt.

In einer bevorzugten Ausführungsform ist das zweite, freie Leitungsende 8 des Leitungselements 6 mit zumindest dem ersten Auslauf 4 der Aufschäumvorrichtung 1 koppelbar. In diesem gekoppelten Zustand ist ein Reinigungsbetrieb der Aufschäumvorrichtung 1 möglich. Dabei wird infolge eines über den Dampf-/Luftzuführkanal 2 eintretendes Dampf-/Luftgemisch der Inhalt des Leitungselements 6 angesaugt und ein Teil dieses Reinigungsfluids, bestehend aus Dampf, Wasser, Luft und Restmilch, über den ersten Auslauf 4 wieder in das Leitungselement 6 zurückgeleitet. Ein anderer Teil des Reinigungsfluids fließt allerdings über den zweiten Auslauf 5 aus der Aufschäumvorrichtung 1. Durch diese kontinuierliche Zufuhr von Dampf/Luft, der Zirkulation des Reinigungsfluids in der Aufschäumvorrichtung 1, in dem Leitungselement 6, in dem Ansaugkanal 3 und in dem Auslauf 4 und durch den permanenten Abfluss dieses Reinigungsfluids aus der Aufschäumvorrichtung 1 über den Auslaufe 5 kann eine sehr gute Reinigungswirkung erreicht werden, da eine permanente Verdünnung des Milchanteils in dem Reinigungsfluid stattfindet, eine relativ hohe Temperatur herrscht und durch die hohe Strömungsgeschwindigkeit auch eine mechanische Reinigung erzielt wird.

In einer bevorzugten Ausführungsform ist das zweite, freie Ende 8 des Leitungselements 6 ebenfalls mit dem zweiten Auslauf 5 koppelbar. In diesem Fall wird es möglich, sowohl den ersten Auslauf 4 als auch den zweiten Auslauf 5 durch eine Zirkulation des Reinigungsfluids zu reinigen. Um die Reinigungswirkung noch zu verstärken, kann ein flüssiges oder festes Detergens 10, das heißt ein insbesondere fettlösendes Reinigungsmittel, zugegeben werden. Dadurch lösen sich eventuell an den Wänden festsitzende Milchrestbestandteile besser und die Aufschäumvorrichtung 1 kann infolgedessen gründlicher gereinigt werden. Nach der Zirkulation des Reinigungsfluids mit dem Detergens 10 sollte allerdings die Aufschäumvorrichtung 1 klargespült werden.

Das zweite, freie Leitungsende 8 des Leitungselements 6 kann auf verschiedene Art und Weise mit den Ausläufen 4, 5 gekoppelt werden. Dabei ist es denkbar, dass das freie Ende 8 des Leitungselements 6 form- und/oder kraftschlüssig an den Ausläufen 4, 5 angeschlossen werden kann. In jedem Falle ist es jedoch wichtig, dass die Kopplung zwischen dem freien Ende 8 des Leitungselements 6 und zumindest einem der Ausläufe 4, 5 dicht ausgebildet ist. Bei einer bevorzugten Ausführungsform kann das als flexibler Schlauch ausgebildete Leitungselement 6 an seinem zweiten freien Ende 8 eine Schnellkopplungseinrichtung aufweisen, die eine schnelle und gleichermaßen dichte Verbindung mit einem der beiden Ausläufe 4, 5 ermöglicht. Ebenfalls ist es denkbar, dass eine Sensoreinrichtung diese Kopplung des Leitungselements 6 mit seinem zweiten, freien Leitungsende 8 an einen der beiden Ausläufe 4, 5 erkennt. Eine mit der Sensoreinrichtung verbundene Steuerungseinrichtung könnte dann beim Erkennen der Kopplung des zweiten, freien Leitungsendes 8 mit einem der beiden Ausläufe 4, 5 automatisch den Reinigungsbetrieb starten. Im Zuge dieser Automation des Reinigungsbetriebs wäre es auch denkbar, dass die Steuerungseinrichtung so ausgebildet ist, dass an einer bestimmten Stelle des Reinigungsprozesses ein Detergens 10 zugegeben wird. In diesem Fall müsste nach dem Reinigungsprozess auch ein Klarspülprozess angeschlossen werden.

In einer weiteren Ausführungsform ist der erste Auslauf 4 mit einem zweiten Auslauf 5 versehen. Dieser sich am ersten Auslauf 4 befindliche zweite Auslauf 5 könnte als ein vom ersten Auslauf 4 abzweigendes Auslaufstück oder als ein definiertes Loch ausgebildet sein. Über dieses Auslaufstück bzw. definierte Loch kann im Reinigungsbetrieb der überschüssige Teil des Reinigungsfluids austreten bzw. abgeleitet werden.

Eine weitere mögliche Ausführungsform ist so ausgebildet, dass am zweiten Auslauf 5 nur Heißwasser ausgegeben wird. Eine Kopplung des zweiten Auslaufs 5 mit dem zweiten, freien Leitungsende 8 führt in dieser Ausführungsform dazu, dass das Heißwasser des zweiten Auslaufs 5 zumindest das Leitungselement 6 und den Milchansaugkanal 3 spült, während zumindest der erste Auslauf 4 durch das Heißwasser des zweiten Auslaufs 5 und gegebenenfalls durch das Luft-/Dampfgemisch des Dampf-/Luftzuführkanals 2 gespült wird.

### Bezugszeichenliste

- 1: Aufschäumvorrichtung
- 2: Dampf-/Luftzuführkanal
- 3: Ansaugkanal
- 4: erster Auslauf
- 5: zweiter Auslauf
- 6: Leitungselement
- 7: erstes Leitungsende
- 8: zweites, freies Leitungsende
- 9: Milchreservoir
- 10: Detergens

## Patentansprüche

1. Aufschäumvorrichtung (1) zum Aufschäumen einer Mischung aus Luft, Dampf und Milch, insbesondere ein Milchaufschäumer für einen Kaffeeautomaten, mit
- zumindest einem Dampf-/Luftzuführkanal (2),
- einem Ansaugkanal (3) für Milch,
- einem ersten Auslauf (4) und einem zweiten Auslauf (5), wovon zumindest der erste Auslauf (4) zur Ausgabe von Milchschaum ausgebildet ist,
- einem Leitungselement (6), welches im Betriebszustand der Aufschäumvorrichtung (1) mit einem ersten Ende (7) mit dem Milchansaugkanal (3) und mit einem zweiten, freien Ende (8) mit einem Milchreservoir (9) in Verbindung steht,
wobei das Leitungselement (6) mit seinem zweiten, freien Ende (8) mit einem der beiden Ausläufe (4, 5) koppelbar ist, so dass in einem Reinigungsbetrieb ein Luft-Dampfgemisch durch den Dampf-/Luftzuführkanal (2), den ersten/zweiten Auslauf (4, 5), den Milchansaugkanal (3) und das Leitungselement (6) strömt bzw. darin zirkuliert und die Aufschäumvorrichtung (1) über den zweiten/ersten Auslauf (5,4) verlässt und dadurch die Aufschäumvorrichtung (1) reinigt.

2. Aufschäumvorrichtung nach Anspruch 1, **dadurch gekennzeichnet, dass** das Leitungselement (6) als flexibler Schlauch ausgebildet ist.

3. Aufschäumvorrichtung nach Anspruch 1 oder 2, **dadurch gekennzeichnet, dass** das Leitungselement (6) an seinem zweiten, freien Ende (8) eine Schnellkopplungseinrichtung aufweist, welche eine schnelle und dichte Verbindung mit einem der beiden Ausläufe (4, 5) ermöglicht.

4. Aufschäumvorrichtung nach einem der Ansprüche 1 bis 3, **dadurch gekennzeichnet, dass** eine Sensoreinrichtung vorgesehen ist, welche eine Kopplung des Leitungselementes (6) mit seinem zweiten, freien Ende (8) mit einem der beiden Ausläufe (4, 5) erkennt.

5. Aufschäumvorrichtung nach Anspruch 4, **dadurch gekennzeichnet, dass** die Sensoreinrichtung mit einer Steuerungseinrichtung verbunden ist, die beim Erkennen der Kopplung des zweiten, freien Endes (8) des Leitungselementes (6) mit einem der beiden Ausläufe (4, 5) einen Reinigungsbetrieb startet.

6. Aufschäumvorrichtung nach Anspruch 5, **dadurch gekennzeichnet, dass** die Steuerungseinrichtung so ausgebildet ist, dass beim Starten des Reinigungsbetriebs ein Detergens (10) zugegeben wird.

7. Aufschäumvorrichtung nach einem der Ansprüche 1 bis 6, **dadurch gekennzeichnet, dass** die Aufschäumvorrichtung (1) an unterschiedliche Kaffeeautomaten anschließbar ist.

8. Kaffeemaschine, insbesondere ein Kaffeevollautomat, mit einer Aufschäumvorrichtung (1) nach einem der Ansprüche 1 bis 7.

## Claims

1. Foaming device (1) for foaming a mixture of air, steam and milk, particularly a milk foamer for a coffee machine, comprising
- at least one steam/air feed channel (2),
- a suction channel (3) for milk,
- a first outlet (4) and a second outlet (5), of which at least the first outlet (4) is constructed for the delivery of milk froth,
- a duct element (6), which in the operational state of the foaming device (1) is connected by a first end (7) with the milk suction channel (3) and by a second, free end (8) with a milk reservoir (9),
wherein the duct element (6) is couplable by its second, free end (8) with one of the two outlets (4, 5) so that in a cleaning operation an air/steam mixture flows through the steam/air feed channel 92), the first/second outlet (4, 5), the milk suction channel (3) and the duct element (6) or circulates therein and leaves the foaming device (1) via the second/first outlet (5, 4) and thereby cleans the foaming device (1).

2. Foaming device according to claim 1, **characterised in that** the duct element (6) is constructed as a flexible hose.

3. Foaming device according to claim 1 or 2, **characterised in that** the duct element (6) has at its second, free end (8) a quick-action coupling device enabling a quick and tight connection with one of the two outlets (4, 5).

4. Foaming device according to any one of claims 1 to 3, **characterised in that** a sensor device is provided which recognises coupling of the duct element (6) by its second, free end (8) with one of the two outlets (4, 5).

5. Foaming device according to claim 4, **characterised in that** the sensor device is connected with a control device which on recognition of coupling of the second, free end (8) of the duct element (6) with one of the two outlets (4, 5) starts a cleaning operation.

6. Foaming device according to claim 5, **characterised in that** the control device is so constructed that a detergent (10) is added when the cleaning operation is started.

7. Foaming device according to any one of claims 1 to 6, **characterised in that** the foaming device (1) is connectible with different coffee machines.

8. Coffee machine, particularly an automatic coffee machine, with a foaming device (1) according to any one of claims 1 to 7.

## Revendications

1. Dispositif de moussage (1) pour le moussage d'un mélange composé d'air, de vapeur et de lait, en particulier un mousseur à lait pour un automate à café, avec
- au moins un canal d'amenée de vapeur/d'air (2),
- un canal d'aspiration (3) pour le lait,
- un premier écoulement (4) et un deuxième écoulement (5), dont au moins le premier écoulement (4) est constitué afin d'émettre de la mousse de lait,
- un élément de liaison (6) qui est relié, en l'état de fonctionnement du dispositif de moussage (1), par une première extrémité (7) au canal d'aspiration de lait (3) et par une deuxième extrémité libre (8) à un réservoir à lait (9),
dans lequel l'élément de liaison (6) peut être couplé par sa deuxième extrémité libre (8) à l'un des deux écoulements (4, 5), de sorte que, durant un fonctionnement de nettoyage, un mélange air-vapeur traverse resp. circule dans le canal d'amenée de vapeur/d'air (2), le premier/deuxième écoulement (4, 5), le canal d'aspiration de lait (3) et l'élément de liaison (6) et quitte le dispositif de moussage (1) via le deuxième/premier écoulement (5, 4) et nettoie ce faisant le dispositif de moussage (1).

2. Dispositif de moussage selon la revendication 1, **caractérisé en ce que** l'élément de liaison (6) est exécuté sous la forme d'un tuyau flexible.

3. Dispositif de moussage selon la revendication 1 ou 2, **caractérisé en ce que** l'élément de liaison (6) présente à sa deuxième extrémité libre (8) un dispositif de couplage rapide, lequel permet un couplage rapide et étanche avec l'un des deux écoulements (4, 5).

4. Dispositif de moussage selon l'une des revendications 1 à 3, **caractérisé en ce qu'**un dispositif de capteur qui reconnaît un couplage de l'élément de liaison (6) par sa deuxième extrémité libre (8) à l'un des deux écoulements (4, 5) est prévu.

5. Dispositif de moussage selon la revendication 4, **caractérisé en ce que** le dispositif de capteur est relié à un dispositif de commande qui lance un fonctionnement de nettoyage en présence de la reconnaissance du couplage de la deuxième extrémité libre (8) de l'élément de liaison (6) avec l'un des deux écoulements (4, 5).

6. Dispositif de moussage selon la revendication 5, **caractérisé en ce que** le dispositif de commande est constitué de sorte à adjoindre un détergent (10) lors du lancement du fonctionnement de nettoyage.

7. Dispositif de moussage selon l'une des revendications 1 à 6, **caractérisé en ce que** le dispositif de moussage (1) peut être raccordé à divers automates à café.

8. Machine à café, en particulier une machine à café intégralement automatisée, avec un dispositif de moussage (1) selon l'une des revendications 1 à 7.
